# DEMANDE DE BREVET EUROPEEN

(11) **EP 2 966 517 A1**
(43) Date de publication de la demande: **13.01.2016**
(21) Numéro de dépôt: 14176614.7
(22) Date de dépôt: 10.07.2014
(51) Int. Cl.: G04G 21/08

(54) **Dispositif électronique portable d'affichage d'une information**

(71) Demandeur: The Swatch Group Research and Development Ltd., 2074 Marin (CH)
(72) Inventeur: Nicolas, Cédric, 2000 Neuchâtel (CH); Heck, Pascal, 3235 Erlach (CH); Vuille, Pierry, CH-2338 Les Emibois (CH); Hoover, David, 1315 La Sarraz (CH)
(74) Mandataire: Ravenel, Thierry Gérard Louis

(57) **Abrégé**

L'invention se rapporte à un dispositif électronique portable apte à afficher une information se fixant au poignet, et comprenant:
- un bracelet formé par un élément flexible,
- un ensemble électronique,
- des moyens d'affichage,
- une source d'énergie.

Selon l'invention, le dispositif comprend des moyens de commande comprenant au moins une jauge de contrainte capable par l'application d'une pression sur la jauge de contrainte de générer un signal de commande qui est appliqué audit ensemble électronique, la direction et la position de la pression sur ladite jauge de contrainte permettant d'afficher une information et/ou d'activer une fonction prédéterminée.

## Description

### Domaine de l'invention

La présente invention a pour objet un dispositif électronique portable apte à afficher au moins une information, et plus particulièrement un dispositif électronique portable tel qu'une montre.

### Arrière-plan de l'invention

Généralement, de tels dispositifs permettent par exemple d'afficher l'heure en proposant un encombrement réduit.

De nombreux dispositifs d'entrée de données dans des moyens électroniques destinés à traiter ces données sont déjà connus. Ces dispositifs peuvent comprendre, par exemple des touches tactiles, chacune des touches étant associée à une fonction. Le document EP 1 394 640 divulgue un tel dispositif comprenant des moyens pour l'activation d'une fonction telle que le déclenchement du chronomètre ou encore de la mise à l'heure. De telles touches tactiles permettent avantageusement de remplacer les boutons poussoirs habituels.

Une telle montre présente cependant plusieurs inconvénients. L'un de ces inconvénients réside dans le fait que les touches tactiles sont très sensibles au toucher. Il suffit ainsi que l'utilisateur de la montre effleure involontairement l'une des touches du clavier pour qu'aussitôt le caractère ou l'opération correspondant à cette touche soit sélectionné et activé par le circuit électronique de traitement des données.

De plus, il est nécessaire que les capteurs tactiles soient constamment alimentés par un courant électrique pour pouvoir être utilisés le moment venu, ce qui pose un problème de consommation électrique.

Il existe également des dispositifs de type montre bracelet présentant un écran tactile. Un tel dispositif est divulgué dans le document EP 2 449 434 et présente un affichage matriciel numérique, une glace tactile munie d'une pluralité d'électrodes ainsi qu'un circuit de traitement destiné à interpréter les signaux des électrodes pour sélectionner une fonction.

Un inconvénient d'un tel dispositif est que les moyens électroniques incorporés à la montre doivent développer des stratégies d'identification complexes, ce qui pose également un problème de consommation électrique, le dispositif devant être rechargé régulièrement.

Le document EP 1 235 122 divulgue une pièce d'horlogerie, en particulier une montre-bracelet, un clavier à touches tactiles permettant à un utilisateur de sélectionner l'une des fonctions de la montre, l'écran tactile étant associé à une jauge de contrainte permettant de confirmer la sélection de la fonction recherchée et/ou d'activer cette dernière par application d'une pression mécanique sur la montre.

Un inconvénient d'un tel dispositif est qu'il est fastidieux de sélectionner et activer la fonction désirée. En effet, l'utilisateur doit manipuler la montre et effectuer plusieurs opérations avant de pouvoir activer la fonction désirée.

### Résumé de l'invention

L'invention a notamment pour objectif de pallier les différents inconvénients de ces techniques connues.

Plus précisément, un objectif de l'invention est de fournir un dispositif électronique qui soit simple à manipuler et qui permette de s'affranchir des boutons poussoirs.

L'invention a également pour objectif, au moins dans un mode de réalisation particulier, de fournir un dispositif qui soit compact et peu coûteux.

Ces objectifs, ainsi que d'autres qui apparaîtront plus clairement par la suite, sont atteints selon l'invention à l'aide d'un dispositif électronique portable apte à afficher au moins une information, ledit dispositif électronique pouvant se fixer à une partie du corps d'un utilisateur, notamment le poignet, ledit dispositif électronique comprenant:
- un bracelet comprenant un corps semi-rigide formé par un élément flexible inférieur et un élément flexible supérieur présentant un fond et des bords,
- un ensemble électronique,
- des moyens d'affichage permettant d'afficher au moins une information,
- une source d'énergie alimentant ledit ensemble électronique et lesdits moyens d'affichage.

Selon l'invention le dispositif comprend des moyens de commande comprenant préférentiellement au moins une jauge de contrainte, capable par l'application d'une pression sur ladite jauge de contrainte de générer un signal de commande qui est appliqué audit ensemble électronique, la direction et la position de la pression sur ladite jauge de contrainte permettant d'afficher une information et/ou d'activer une fonction prédéterminée.

Selon des caractéristiques optionnelles de l'invention, prises seules ou en combinaison :
- ledit bracelet est monobloc, de forme circulaire et présente au moins une partie médiane et deux parties latérales ;
- lesdits moyens de commande comprennent au moins deux jauges de contrainte ;
- une jauge de contrainte est disposée au niveau de chaque partie latérale dudit bracelet ;
- une jauge de contrainte est disposée au niveau de ladite au moins une partie médiane dudit bracelet ;
- l'ensemble électronique différencie une pression courte d'une pression longue exercée sur au moins une jauge de contrainte ou un ensemble de jauges de contrainte ;
- l'ensemble électronique détecte la force de pression exercée sur au moins une jauge de contrainte ou un ensemble de jauges de contrainte ;
- la confirmation et/ou la validation de la fonction recherchée est effectuée en appuyant sur l'une desdites jauges de contrainte ;
- le défilement des heures, notamment lors du réglage de l'heure, est plus ou moins rapide en fonction de la pression exercée sur au moins une jauge de contrainte ou un ensemble de jauges de contrainte ;
- une pression courte sur une jauge de contrainte correspond à l'activation du chronomètre et une nouvelle pression sur la même jauge de contrainte correspond à l'arrêt du chronomètre ;
- une pression longue dans le sens vertical sur deux jauges de contrainte permet de sélectionner une heure d'alarme ;
- une pression longue dans le sens horizontal sur deux jauges permet d'activer ledit dispositif électronique ;
- lesdits moyens de commande comprennent un corps souple sous la forme d'une bande flexible ;
- ladite au moins une jauge de contrainte est collée sur ladite bande flexible.

Ainsi, l'objet de la présente invention, par ses différents aspects fonctionnels et structurels décrits ci-dessus, permet de fournir un dispositif électronique fiable et simple à l'utilisation.

### Description sommaire des dessins

D'autres caractéristiques et avantages de l'invention apparaîtront plus clairement à la lecture de la description suivante d'un mode de réalisation particulier de l'invention, donné à titre de simple exemple illustratif et non limitatif, et des figures annexées, parmi lesquelles :
- la figure 1 est une vue éclatée du dispositif électronique conforme à l'invention ;
- la figure 2 est une vue détaillée du dispositif électronique conforme à l'invention ;
- la figure 3 est une vue en perspective d'un dispositif électronique conforme à l'invention.

### Description détaillée des modes de réalisation préférés

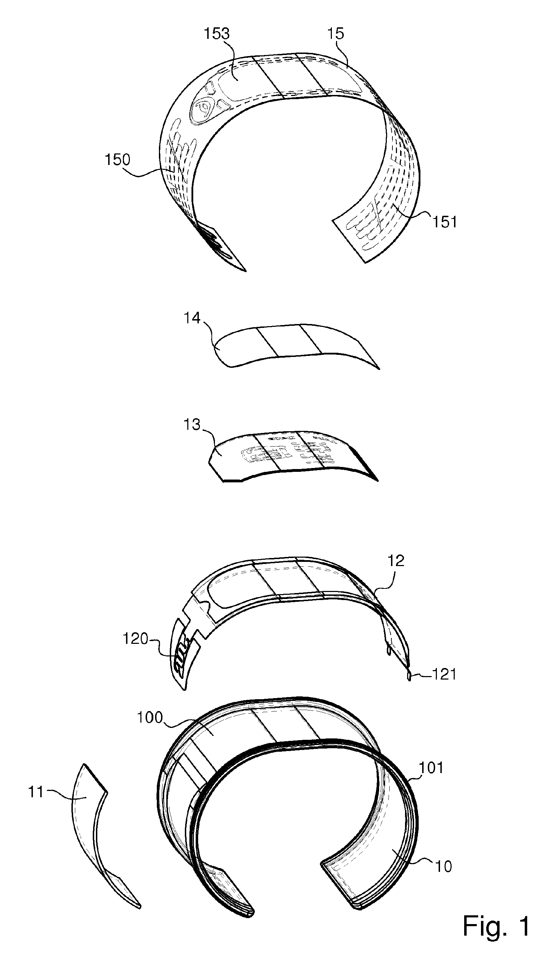

Un dispositif électronique selon un exemple de réalisation va maintenant être décrit dans ce qui suit faisant référence conjointement aux figures 1 à 3.

Comme précédemment évoqué, le principe général de l'invention repose sur la mise en oeuvre d'un dispositif 1 électronique portable, et plus particulièrement une montre, associée à au moins une jauge de contrainte permettant de sélectionner une fonction recherchée et/ou d'activer cette dernière par application d'une pression sur le bracelet de la montre.

Dans cet exemple, le dispositif 1 est composé d'un bracelet 10 formé par un élément monobloc semi-rigide en forme de C présentant un fond 100 et un bord périphérique 101 de manière à former un réceptacle apte à recevoir les composants du dispositif électronique 1. Selon un autre mode de réalisation, le bracelet présente une forme circulaire fermée, le bracelet pouvant alors être déformé diamétralement pour le placer sur le poignet.

Le bracelet 10 peut être fabriqué dans un matériau plastique légèrement déformable de manière à s'adapter à la morphologie de l'utilisateur, l'utilisation d'un matériau métallique pouvant aussi être envisagée. On comprendra ici que d'autres matériaux auraient pu être envisagés par l'homme du métier dans le cadre de la présente invention.

Le réceptacle ainsi formé par le bracelet 10 est apte à recevoir un ensemble électronique 12, tel qu'un PCB (Printed Circuit Board), auquel sont associés des moyens d'affichage 13, tels qu'un écran à cristaux liquides, permettant d'afficher au moins une information, telle que l'heure ou encore la date, des moyens de solidarisation 14 tels qu'un adhésif optique réalisé dans un matériau transparent et aptes à être disposés sur les moyens d'affichage 13 de manière à protéger l'écran à cristaux liquides des rayures par exemple.

Des moyens d'éclairage de l'écran à cristaux liquides peuvent être disposés sous ce dernier de façon à éclairer l'écran par l'arrière.

Le dispositif comprend aussi une source d'énergie 11 destinée à alimenter l'ensemble électronique 12 et les moyens d'affichage 13. Cette source d'énergie peut comprendre une batterie rechargeable, la batterie étant suffisamment fine pour limiter l'encombrement du dispositif 1.

Le dispositif 1 peut ainsi comporter un connecteur de type micro-USB pour relier le dispositif 1 à une source électrique afin de recharger la batterie.

Selon l'invention, la taille et la résolution de l'écran sont suffisantes pour afficher simultanément plusieurs informations, par exemple l'heure courante, la date ou encore l'état de la batterie.

Selon un mode de réalisation particulier de l'invention, un capteur de luminosité peut être disposé de manière à adapter l'intensité de l'écran/du rétroéclairage en fonction de la luminosité ambiante.

Les moyens de commande 15 du dispositif 1 se présentent sous la forme d'un film souple supérieur venant se positionner par-dessus les moyens d'affichage 13 et recouvrant l'ensemble électronique 12, une ouverture 153 étant prévue pour les moyens d'affichage 13. L'ensemble des éléments constitutifs du dispositif 1 est maintenu en place dans le réceptacle du bracelet 10 au moyen de l'adhésif optique 14 venant se positionner sur le bracelet 10. Préférentiellement, l'adhésif optique est réalisé dans un matériau souple et déformable de manière à pouvoir déformer facilement sur les jauges de contrainte 150, 151.

Selon l'invention, les moyens de commande 15 comprennent au moins un ensemble de deux jauges de contrainte 150, 151 permettant d'afficher une information et/ou d'activer une fonction, l'affichage de l'information et/ou l'activation de la fonction étant effectuée par l'application d'une pression sur au moins l'une des jauges de contrainte 150, 151 qui génère un signal de commande qui est envoyé à l'ensemble électronique 12. Le dispositif est ainsi dépourvu de boutons poussoirs pour activer une fonction ou afficher une information, et permet au dispositif de rester très mince.

L'ensemble électronique 12 comprend notamment des moyens de traitement formés par un microcontrôleur et une mémoire, permettant d'interpréter les signaux provenant des jauges de contrainte 150, 151 et d'afficher sur les moyens d'affichage 13 les informations associées à ces signaux, ou de sélectionner une fonction parmi plusieurs fonctions disponibles en fonction de ces signaux, les fonctions étant enregistrées dans la mémoire de l'ensemble électronique 12.

Comme on peut l'observer sur la figure 1, l'ensemble électronique 12 comprend des connecteurs 120, 121 configurés pour coopérer avec la batterie 11 et les jauges de contrainte 150, 151. Une telle disposition des éléments constitutifs du dispositif 1 permet d'obtenir un dispositif relativement compact.

Selon l'exemple illustré, les moyens d'affichage 13 viennent se positionner au-dessus de l'ensemble électronique 12 de manière à les connecter aisément à ce dernier, limitant ainsi l'encombrement du dispositif 1.

Selon l'invention, et tel qu'illustré sur les figures, les moyens de commande 15 se présentent sous la forme d'une bande souple à laquelle sont assujetties, par collage par exemple, les jauges de contrainte 150 et 151, la bande souple présentant un évidement en son centre pour les moyens d'affichage 13. Avantageusement, chaque jauge de contrainte 150, 151 est disposée pour reposer au niveau de chaque brin du bracelet 10.

Selon l'invention, le dispositif électronique 1 portable comprend également une jauge de contrainte 152 disposée au centre du bracelet 10, sous l'ensemble électronique 12, cette dernière coopérant directement avec l'ensemble électronique 12.

Une telle disposition des jauges de contrainte 150, 151 et 152 permet de différencier plusieurs directions et positions de la pression à exercer sur les jauges de contrainte afin d'y attribuer différentes fonctions.

Selon l'invention, l'ensemble électronique 12 est apte à différencier une pression courte d'une pression longue exercée sur au moins une jauge de contrainte 150 ou un ensemble de jauges de contrainte 150/151, ou encore 150/152, 151/152. Un tel aspect de l'invention permet d'augmenter le nombre de fonctions possible pour le dispositif.

Selon un aspect particulièrement simple de l'invention, la confirmation et/ou la validation de la fonction recherchée est effectuée en appuyant sur l'une desdites jauge de contrainte 150, 151, 152.

Par exemple, une pression courte exercée sur l'une des jauges de contrainte 150, 151 ou 152 peut être associée à l'activation du chronomètre et une nouvelle pression courte sur la même jauge de contrainte permet l'arrêt du chronomètre.

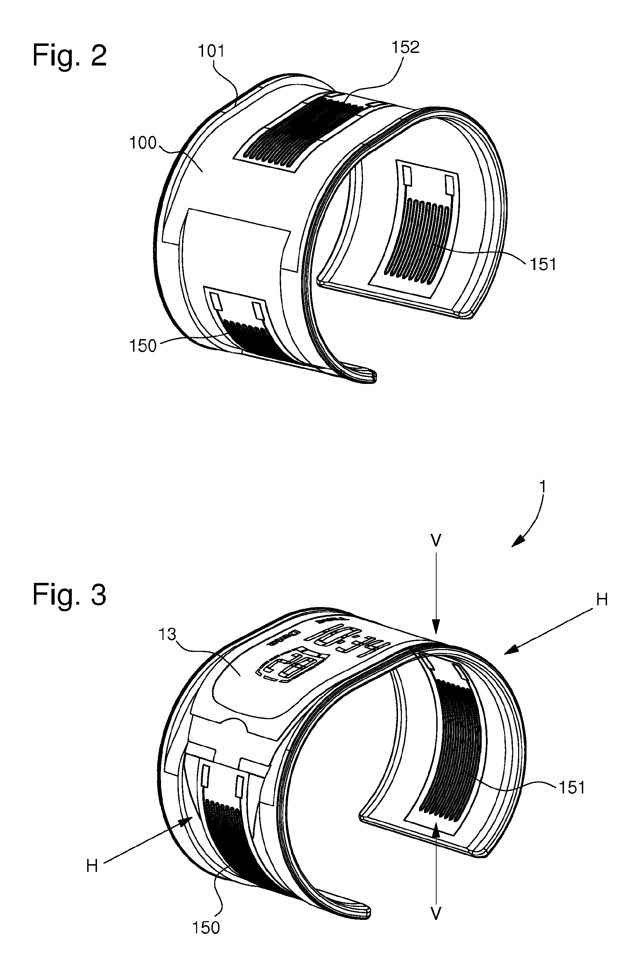

Encore selon un exemple de fonction possible, une pression longue dans les sens vertical sur deux jauges de contrainte 150, 152 permet d'accéder à la sélection de l'heure d'alarme. Bien évidemment, la pression exercée sur les jauges de contrainte peut aussi bien être appliquée horizontalement selon le sens des flèches H que verticalement selon le sens des flèches V comme illustré à la figure 3, l'activation des fonctions dépendant de la manière dont celles-ci ont été programmées.

On peut également mettre en place une fonction selon laquelle une pression longue dans le sens horizontal sur deux jauges 150, 151 permet d'activer le dispositif électronique.

Une fonction peut également être appliquée à une simple pression, longue ou courte, sur chacune des jauges de contrainte 150, 151, 152. Ainsi, une pression longue sur la jauge de contrainte 152 peut par exemple permettre d'activer l'éclairage de l'écran à cristaux liquides.

Selon l'invention, l'ensemble électronique 12 détecte la force de pression exercée sur au moins une jauge de contrainte 150, 151, 152 ou un ensemble de jauges de contrainte, la détection de la force appliquée sur la ou les jauges de contrainte 150, 151, 152 pouvant se faire par le franchissement de seuils préenregistrés dans la mémoire.

La détection de la force appliquée permet de mettre en oeuvre d'autres fonctions telles que le défilement des heures lors du réglage de l'heure dar exemple. Le défilement des heures est plus ou moins rapide en fonction de la pression exercée sur au moins une jauge de contrainte ou un ensemble de jauges de contrainte 150, 151, 152.

Toutes les fonctions connues de l'homme du métier peuvent ainsi être enregistrées dans la mémoire de l'ensemble électronique 12 et être activées aisément aux moyens des jauges de contrainte 150, 151 et 152.

Le montage du dispositif électronique 1 est réalisé comme suit. L'écran à cristaux liquides 13 et la batterie 11 sont assemblés au PCB 12 puis fixés au film supérieur 15 par l'intermédiaire de l'adhésif optique 14. Selon le mode de réalisation illustré, les jauges de contrainte 150, 151, 152 sont fixées au film supérieur 15 et connectées au PCB 12. Cet élément comprenant toute l'électronique est ensuite collé sur le bracelet 100 sur tout le pourtour du film supérieur 15 et sous chaque jauge de contrainte 150, 151, 152 de manière à s'assurer que les jauges soient solidaires du bracelet 100 et puissent mesurer la déformation du bracelet 100.

Selon un autre mode de réalisation, non représenté sur les figures, les jauges de contrainte 150, 151, 152 sont fixées au PCB 12 par le biais d'un soudage.

Une colle spécifique peut être utilisée lors de l'assemblage du dispositif 1 pour rendre ce dernier étanche au moins aux projections d'eau.

Grâce à ces différents aspects de l'invention, on dispose d'un dispositif électronique 1 portable aisé à manipuler et à utiliser pour un utilisateur, et dont il n'est pas nécessaire de manipuler des boutons poussoirs pour activer les fonctions.

Naturellement, d'autres modes de réalisation peuvent être envisagés par l'homme du métier sans pour autant sortir du cadre de l'invention définie par les revendications ci-après.

### NOMENCLATURE

1. Dispositif électronique portable,
10. Bracelet,
100. Fond du bracelet,
101. Bord périphérique du bracelet,
11. Batterie,
12. Ensemble électronique,
120, 121. Connecteurs,
13. Moyens d'affichage,
14. Adhésif optique,
15. film supérieur souple,
150, 151, 152. Jauges de contrainte,
153. Ouverture,
H. Pression dans le sens horizontal,
V. Pression dans le sens vertical.

## Revendications

1. Dispositif électronique portable (1) apte à afficher au moins une information, ledit dispositif électronique (1) pouvant se fixer à une partie du corps d'un utilisateur, notamment le poignet, ledit dispositif électronique (1) comprenant:
- un bracelet (10) formé par un élément semi-rigide présentant un fond (100) et un bord périphérique (101),
- un ensemble électronique (12),
- des moyens d'affichage (13) permettant d'afficher au moins une information,
- une source d'énergie alimentant ledit ensemble électronique et lesdits moyens d'affichage,
**caractérisé en ce que** ledit dispositif (1) comprend des moyens de commande (15) comprenant au moins une jauge de contrainte (150), capable par l'application d'une pression sur ladite jauge de contrainte (150) de générer un signal de commande qui est appliqué audit ensemble électronique (12), la direction et la position de la pression sur ladite jauge de contrainte (150) permettant d'afficher une information et/ou d'activer une fonction prédéterminée.

2. Dispositif électronique (1) portable selon la revendication 1, dans lequel ledit bracelet (10) est monobloc, de forme circulaire et présente au moins une partie médiane et deux parties latérales.

3. Dispositif électronique (1) portable selon la revendication 1 ou 2, dans lequel lesdits moyens de commande comprennent au moins deux jauges de contrainte (150, 151).

4. Dispositif électronique (1) portable selon l'une des revendications 1 à 3, dans lequel une jauge de contrainte (150, 151) est disposée au niveau de chaque partie latérale dudit bracelet (10).

5. Dispositif électronique (1) portable selon l'une des revendications 1 à 4, dans lequel une jauge de contrainte (152) est disposée au niveau de ladite au moins une partie médiane dudit bracelet (10).

6. Dispositif électronique (1) portable selon l'une des revendications 1 à 5, dans lequel l'ensemble électronique (12) différencie une pression courte d'une pression longue exercée sur au moins une jauge de contrainte (150, 151, 152) ou un ensemble de jauges de contrainte.

7. Dispositif électronique (1) portable selon l'une des revendications 1 à 6, dans lequel l'ensemble électronique (12) détecte la force de pression exercée sur au moins une jauge de contrainte (150, 151, 152) ou un ensemble de jauges de contrainte.

8. Dispositif électronique (1) portable selon l'une des revendications 1 à 7, dans lequel la confirmation et/ou la validation de la fonction recherchée est effectuée en appuyant sur l'une desdites jauge de contrainte (150, 151, 152).

9. Dispositif électronique (1) portable selon l'une des revendications 1 à 8, dans lequel le défilement des heures, notamment lors du réglage de l'heure, est plus ou moins rapide en fonction de la pression exercée sur au moins une jauge de contrainte (150, 151, 152) ou un ensemble de jauges de contrainte.

10. Dispositif électronique (1) portable selon l'une des revendications 1 à 9, dans lequel une pression courte sur une jauge de contrainte (150, 151, 152) correspond à l'activation du chronomètre et une nouvelle pression sur la même jauge de contrainte (150, 151, 152) correspond à l'arrêt du chronomètre.

11. Dispositif électronique (1) portable selon l'une des revendications 1 à 10, dans lequel une pression longue dans le sens vertical sur deux jauges de contrainte (150, 151, 152) permet de sélectionner une heure d'alarme.

12. Dispositif électronique portable (1) selon l'une des revendications 1 à 11, dans lequel une pression longue dans le sens horizontal sur deux jauges (150, 151, 152) permet d'activer ledit dispositif électronique (1).
